# EUROPEAN PATENT APPLICATION

(11) **EP 3 889 436 A1**
(43) Date of publication of application: **06.10.2021**
(21) Application number: 21166029.5
(22) Date of filing: 30.03.2021
(51) Int. Cl.: F04D 19/00, F04D 25/12, F04D 27/00, F04D 29/54, F04D 29/70

(54) **FANS FOR VENTILATION**

(30) Priority: 31.03.2020 GB 202004732
(71) Applicant: TITON HARDWARE LIMITED, Colchester, Essex CO4 9YQ (GB)
(72) Inventor: Cowell, Paul, West Mersea C05 8JZ (GB); Lilley, Stephen, Colchester C05 0AD (GB); Green, Nick, Braintree CM7 5PZ (GB)
(74) Representative: Miller, James Lionel Woolverton

(57) **Abstract**

A fan (16) for ventilation comprises: a housing (22); an impeller (44); a motor (48) arranged to drive the impeller to drive air flow from an inlet to the fan to an outlet (24) thereof, the impeller being located centrally within a flow duct; and at least one inlet guide vane (70) for guiding flow approaching the impeller, the impeller being located axially wholly within a tapered duct portion (42, 82) of the duct; and at least one downstream guide vane (62) which is at least partly curved and arranged to reduce swirl in flow downstream of the impeller; the motor being located in a duct and having a motor cover, the motor and motor cover being secured to a support by a common fixing 54; and an associated data communication system (18, 200, 202, 214, 216, 220) for fan unit control has a wireless link from plurality of fan units into a single app or control unit to enable common fan speed boost functionality, the fan unit being adapted to use weather data collected or stored remotely from the at least one fan unit to inform and potentially modify operation of the fan(s) based on local weather conditions predicted or current at the at least one fan unit.

## Description

The present invention relates to fans for ventilation, such as building ventilation extract and decentralised mechanical extract ventilation systems.

Known building ventilation extract units are known to be noisy, one conventional such unit having a sound power level at 25 litres per sec with zero back pressure of 55 dB(A).

It is an object of the present disclosure to improve ventilation for the provision of high air flows and high pressure differentials with low specific fan power and low noise levels. There is a proposed regulation, the PCDB (Product Characteristics Database) test, which includes a requirement of 20 Pa of back pressure causing no greater than a 30% of reduction in air flow and many currently available units will fail this test if implemented.

It is an object of the present invention to alleviate at least to a certain extent at least one of the problems of the prior art.

It is an alternative object of the invention to provide a useful fan for ventilation.

According to a first aspect of the present disclosure there is provided a fan for ventilation, such as building ventilation extract, the fan comprising:
a housing;
an impeller;
a motor arranged to drive the impeller to drive air flow from an inlet to the fan to an outlet thereof, the impeller being located centrally within a flow duct;
and at least one inlet guide vane for guiding flow approaching the impeller.

This arrangement, surprisingly due to the additional form drag which might be expected, advantageously improves flow through the fan, assisting in enabling quieter fan operation as not so much power is needed for a particular flow rate and additionally enabling the fan to keep providing enough flow rate at a given power setting when a back pressure, for example of 20 Pa, is applied. In some examples, fan power consumption may be less than 50 W, or less than 25 W, or less than 15W, 12W being one example at a maximum speed of the fan. The fan may thus be relatively small.

The fan may be relatively small in that the flow duct is generally circular and small in diameter whereby said diameter is less than 100 mm, preferably less than 65 mm e.g. 62 mm.

The fan may be relatively small in that the housing includes a port adapted to connect to a generally circular ventilation duct having a diameter of less than 250 mm, preferably 150 mm or less, such as 125 mm or less, e.g. 100 mm. Some example sizes of such a ventilation duct are 150 mm (6 inch), 125 mm (5 inch) and 100 mm (4 inch). Larger or smaller sizes may be used with some embodiments hereof.

Each guide vane may have an inlet surface portion near the inlet which extends substantially radially and axially, preferably in a plane which contains a rotation axis of the impeller.

Each guide vane may have a trailing portion thereof which is angled so as to introduce swirl.

The guide vane having this trailing portion has been found to be particularly advantageous in that introducing swirl can highly advantageously set up the flow to a suitable angle of approach and angle of attack for downstream impeller blades of the impeller to improve impeller performance, both in flow rate and in noise terms.

A series of, e.g. five, said guide vanes may be provided mutually angularly spaced apart in a series around an axis of rotation of the impeller.

Each guide vane may be adapted to support a finger protection guard.

This advantageously enables the fan to be located in, for example, domestic situations.

The finger protection guard may include at least one circumferential ring member which is attached to each guide vane.

This can enable the finger guard to provide additional strength to the guide vane structure, therefore enabling the guide vane to be made of less material and more aerodynamic.

The impeller may be located axially wholly within a tapered duct portion of the flow duct; the tapered duct portion preferably tapering outwards in the downstream direction.

The tapered duct advantageously allows flow to be sent around downstream components such as the motor when this is located in the duct downstream of the impeller.

The impeller may have a tapered hub whose taper approximates to or substantially matches the taper of the tapered duct portion; preferably wherein the tapered hub is conical or outwardly convex in a plane containing an axis of rotation of the impeller.

This advantageously allows smooth flow without large discontinuities, allowing relatively high flow rates at relatively low fan power even when back pressure is applied to the flow, aiding and providing good performance with low noise output. In some examples, fan power consumption may be less than 50 W, or less than 25 W, or less than 15W, 12W being one example at a maximum speed of the fan.

The impeller may have a series of impeller blades; each fan blade preferably having curvature; each fan blade more preferably having a convex side facing the inlet and a concave side thereof facing the outlet; the motor typically being adapted to spin the impeller in a forward facing direction with the concave side next to air flow at higher pressure than air flow next to the convex side.

With the impeller blades curved in this fashion and operated in and/or arranged for forward facing operation, as opposed to backward facing operation, the fan can be made particularly quiet in comparison to prior art conventional systems which have backward facing blades due to the flow rate requirements for operation that they have. Using the present fan with the curved forward facing blades in the impeller and an inlet guide vane, it has been surprisingly found possible to produce an arrangement with very low noise output yet also providing greatly improved flow rate performance characteristics. This is especially so when the inlet guide vane is contoured so as to produce swirl in the flow approaching leading edges of the fan blades of the impeller.

The fan may include at least one downstream guide vane.

Each downstream guide vane may have a leading edge portion which is curved away from being parallel to an axis of rotation of the impeller to meet swirling flow, as well as optionally a trailing edge portion which extends substantially radially and longitudinally so as to reduce swirl.

An inlet guide vane and/or a downstream guide vane may be fixed in pitch. Variable pitch is envisaged in some embodiments.

This has been found to be advantageous in that less energy in the flow leaving the fan is due to velocity in swirl of the flow and the energy is instead substantially in either the pressure head or in the axial velocity of the flow. Additionally, the leading edge of each downstream guide vane, with its curve away from being parallel to the axis of rotation of the impeller, can be optimised to meet the swirl of the direction of flow exiting from the downstream edges of the blades of the impeller. Therefore, it has been noted that the angle of attack of the air flow both arriving at the leading edges of the impeller blades and arriving at the leading edge of the downstream guide vane may be highly beneficial. In particular, applying these arrangements, the present inventors have discovered that it is possible to maintain the angle of attack of the flow arriving at the impeller blade and downstream guide vane leading edges at within about plus or minus 10 degrees or about 15 degrees or 17 degrees or 20 degrees, during optimum operation conditions, so that the flow does not stall by way of the boundary layers separating soon after the leading edges. In particular, the flow may remain substantially attached substantially downstream of the leading edges thereby avoiding the losses inherent in stalled flow.

A second aspect of the disclosure provides a fan for ventilation, such as building ventilation extract, the fan comprising:
a housing;
an impeller;
a motor arranged to drive the impeller to drive air flow from an inlet to the fan to an outlet thereof;
the impeller being located axially wholly within a tapered duct portion of the duct.

The tapered duct advantageously allows flow to be sent around downstream components such as the motor when this is located in the duct downstream of the impeller.

The tapered duct portion may taper outwards in a downstream direction.

The impeller may have a tapered hub which may be conical (or slightly convex with a taper chord line from leading edge to a trailing edge defining the taper), whose taper approximates to or substantially matches the taper of the tapered duct portion; the taper of the hub optionally being more than 0 degrees and less than 24 degrees, preferably more than 5 and less than 20 degrees or more than 8 and less than 15 degrees, 10 to 14 degrees being typical and one example being 12 degrees.

It has been found, surprisingly, that in these narrower bands, and near 12 degrees, pressure pulsing, which can happen at low taper angles, is avoided and a large air flow rate is also provided at relatively low fan speeds.

The tapered hub may be conical or outwardly convex in a plane containing an axis of rotation of the impeller.

In an axial direction, the hub may extend substantially the same (or the same) distance as each blade of the impeller.

The impeller may have a series of blades, each fan blade being curved and having a convex side thereof facing the inlet and a concave side thereof facing the outlet.

The fan may have at least one inlet guide vane, the inlet guide vane being adapted to promote swirl.

The fan may have at least one downstream guide vane, the downstream guide vane being adapted to reduce swirl.

The impeller may have at least five blades, for example five, six or seven blades.

The fan may have a series of fan blades on the impeller, each blade being at a pitch of between 30 and 50 degrees, e.g. from 35 to 45 degrees, e.g. 37 to 40 degrees, such as 38 degrees.

It has been found that in these fans, and near to 38 degrees, a relatively high flow rate can be produced yet without the pitch being so high that boundary layer separation and stall is promoted too much.

A third aspect of the disclosure provides a fan for ventilation, such as building ventilation extract, the fan comprising:
a housing;
an impeller;
a motor arranged to drive the impeller and drive air flow from an inlet to the fan to an outlet thereof;
and at least one downstream guide vane which is at least partly curved and arranged to reduce swirl in flow downstream of the impeller.

This has been found to be advantageous in that less energy in the flow leading the fan is due to velocity in swirl of the flow and the energy is instead substantially in either the pressure head or in the axial velocity of the flow. Additionally, the leading edge of each downstream guide vane, with its curve away from being parallel to the axis of rotation of the impeller, can be optimised to meet the swirl of the direction of flow exiting from the downstream edges of the blades of the impeller. Therefore, it has been noted that the angle of attack of the air flow both arriving at the leading edges of the impeller blades and arriving at the leading edge of the downstream guide vane may be optimised. In particular, applying these arrangements, the present inventors have discovered that it is possible to maintain the angle of attack of the flow arriving at the impeller blade and downstream guide vane leading edges at within about plus or minus 10 degrees or about 15 degrees or 17 degrees or 20 degrees, during optimum operation conditions, so that the flow does not stall by way of the boundary layers separating soon after the leading edges. In particular, the flow may remain substantially attached substantially downstream of the leading edges thereby avoiding the losses inherent in stalled flow.

The downstream guide vane may have a leading edge portion which is curved away from an axis of the impeller to meet swirling flow.

A fourth aspect of the disclosure provides a fan for ventilation, such as building ventilation comprising:
a housing;
an impeller;
a motor arranged to drive the impeller to drive air flow from an inlet to an outlet thereof;
the motor being located in a duct and having a motor cover, the motor and motor cover being secured to a support by a common fixing.

This has been advantageously found to be beneficial over prior art arrangements which have a motor cover and motor separately connected to a support in the duct. In particular, the arrangement of this disclosure enables the motor cover and therefore any surrounding hub structure associated with the motor to be relatively narrow in cross-dimension or diameter. This, in turn, leaves a relatively large area for the annulus within the duct through which flow may travel, i.e. outside the motor and in the duct. Due to these features of the present disclosure, the outer diameter may be 62 mm in one embodiment, comparing highly favourable with a conventional unit using the same motor whose outer diameter is 69 mm.

The common fixing may for example be a screw, bolt, rivet, weld or heat stake.

The cover and/or support may comprise a support hub coaxial with the motor.

The support and/or motor cover may be connected to the duct via a guide vane.

The impeller may be upstream of the support hub, the impeller having a central hub and outer surface of which has a downstream trailing peripheral edge which has substantially a same diameter as an adjacent outer diameter of the support hub.

The support hub may have a leading portion which is substantially cylindrical.

The support hub may have a trailing portion which is tapered, decreasing in diameter towards downstream.

The support hub may be connected to the duct by a series of guide vanes.

The duct may be cylindrical in the region of the motor cover and/or the support.

The fan may have a substantially circular cover plate and an air inlet thereto.

A fifth aspect of the disclosure provides a ventilation system including at least one fan as claimed in any preceding disclosure and an exhaust duct attached to an outlet of the fan and installed within a building, the fan being adapted to push air out of the building through the exhaust duct.

A further aspect of the present disclosure provides a data communication system for fan unit control, the system having a wireless (or with cable) link from plurality of fan units into a single app or control unit to enable common fan speed boost functionality.

The system may comprise one app or control unit which is adapted to boost or un-boost speed of two or more fan units with common control for the plurality of fan units, e.g. in response to weather or humidity data.

A further aspect of the present disclosure provides a data communication system for fan unit control, the system having at least one fan unit adapted to use weather data collected or stored remotely (such as online) from the at least one fan unit to inform and potentially modify operation of the fan(s) based on local weather conditions predicted or current at the at least one fan unit.)

A further aspect of the present disclosure provides a data communication system for fan unit control, the system having a fan unit and a data store / centre (or server which may exists in multiple locations) remote from the fan unit and adapted to store and/or permit controlled access to fan data.

Optionally, the fan data is online published data and/or commissioning data, for example for building control purposes.

The present invention may be carried out in various ways and a preferred embodiment of an example of a fan for ventilation in accordance with the invention will now be described by way of example only and with reference to the accompanying drawings, in which:
Figure 1 schematically shows a building in which two preferred fans in accordance with preferred embodiments of the present disclosure have been installed, one in a kitchen and the other in a bathroom;
Figure 2 shows a schematic sectional view of one of the fans installed in a ventilation system in a cavity wall of the building;
Figure 3 shows a cross-section through the fan taken in a plane containing a central axis of the fan;
Figure 4 shows a similar section to Figure 3 but at least partly taken off centre from the axis;
Figure 5 shows a schematic view of air flow past inlet guide vanes, an impeller and downstream guide vanes of the fan;

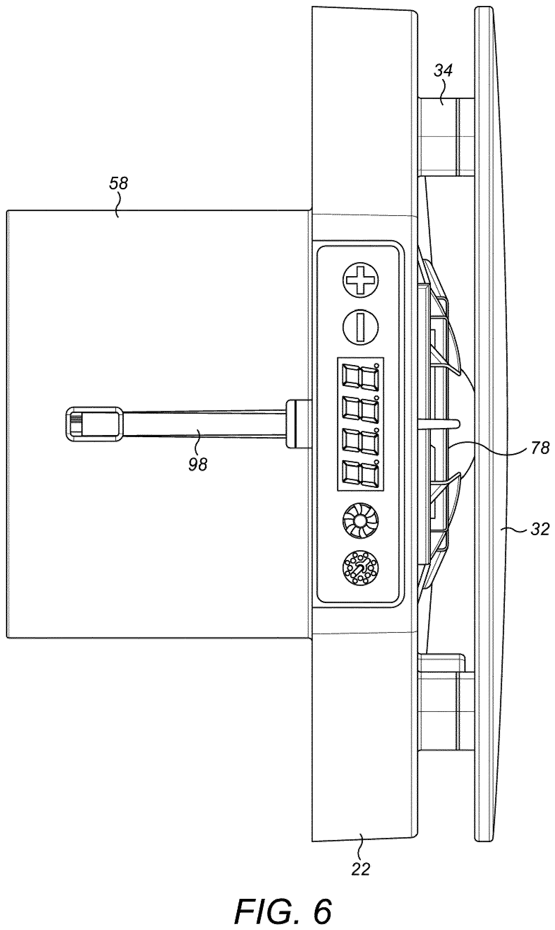

Figure 6 shows a side view of the fan, including a controls label area thereof;
Figure 7 shows an exploded view of the fan;

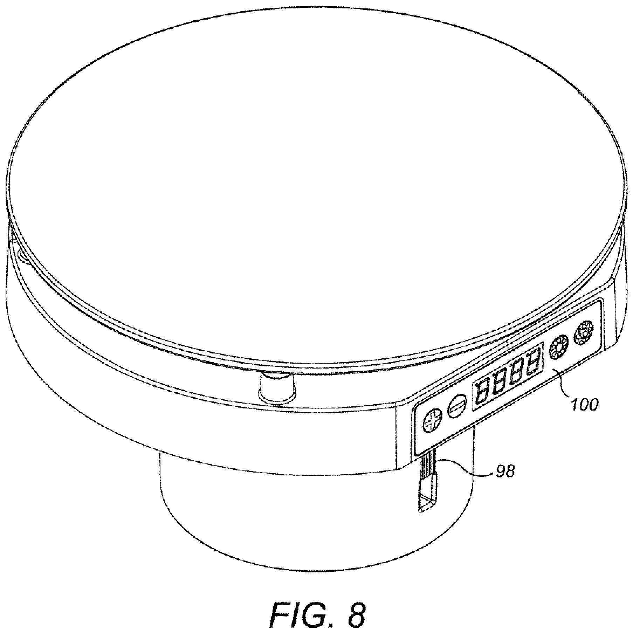

Figure 8 shows an isometric view of the fan;
Figure 9 shows an isometric view similar to Figure 8 but with a fascia cover removed;
Figure 10 shows the controls label in more detail;
Figures 11A and 11B show air flow characteristics at a given motor voltages for the fan compared to a conventional prior art fan; and
Figures 12A, 12B , 13A, 13B, 14A, 14B, 15A, 15B, 16A and 16B show comparative performance in terms of air flow rate against RPM at different applied voltages to the (same) motors in the fan of the present disclosure and of the conventional prior art fan.

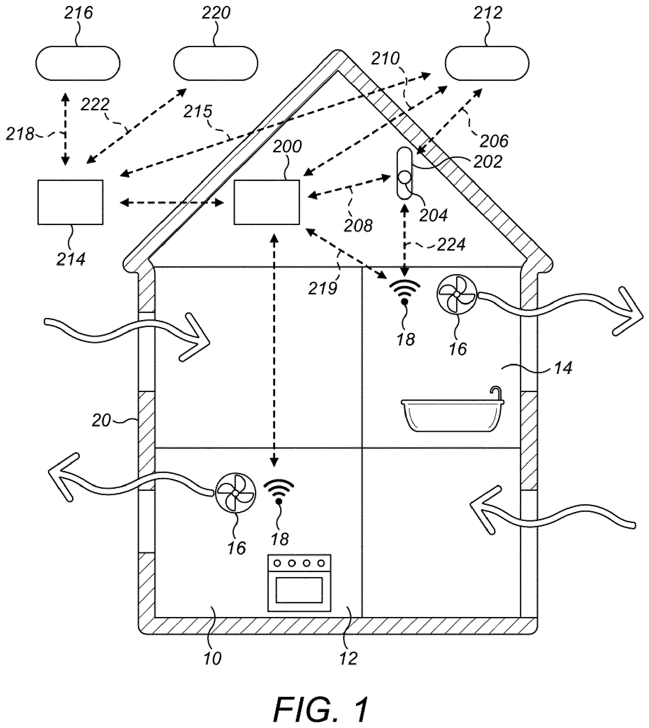

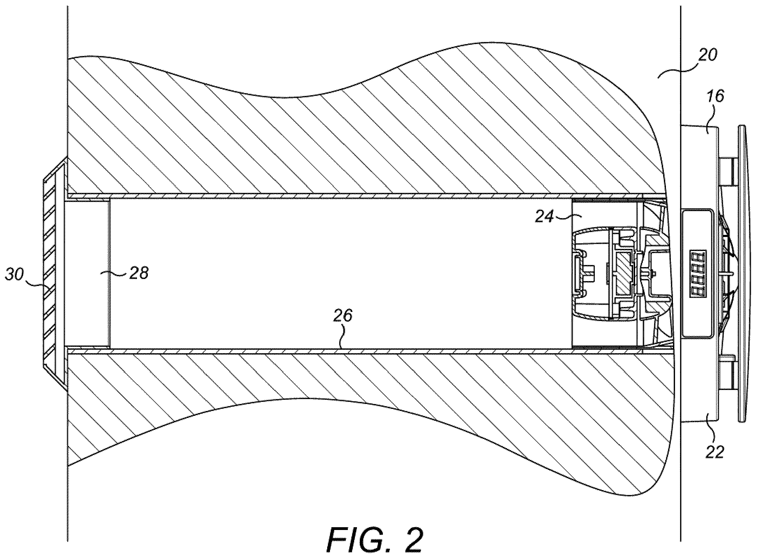

As shown in Figure 1, a building 10 includes a kitchen 12 and bathroom 14, each having a ventilation fan 16 for ventilation extract installed therein. Each fan 16 has its own Wi-Fi connection 18. Each fan 16 as more clearly shown in Figure 2 is installed at a cavity wall 20 of the building 10. The fan 16 has a main body 22 having an exhaust duct 24 thereof inserted into a main exhaust duct 26 extending through the cavity wall 20 to an exterior grille member 28 having ventilation exhaust slots 30 formed therethrough.

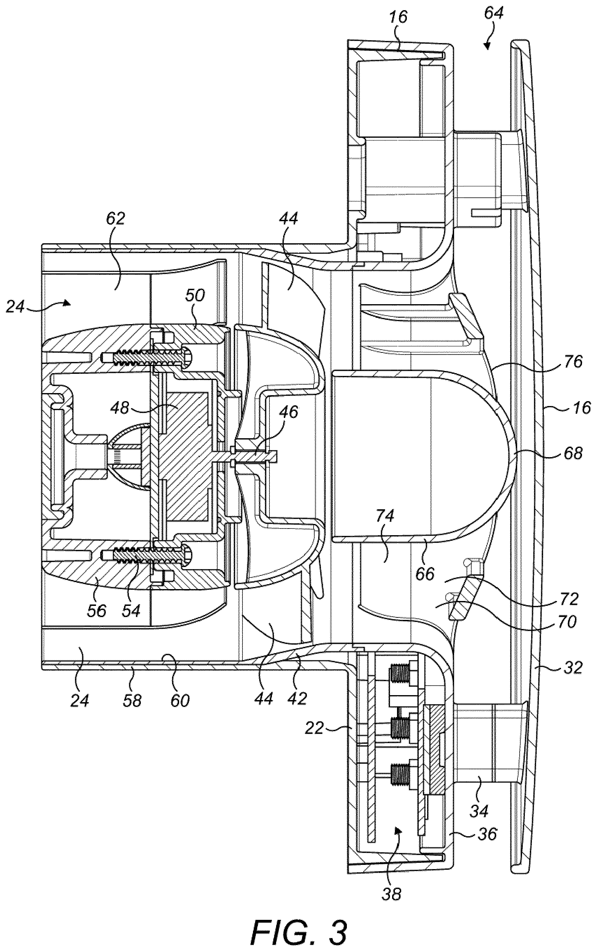

As shown in Figure 3, the fan 16 has a fascia cover 32 fixed via webs 34 to a top housing section 36 of the main body 22. Formed within an interior space 38 of the main body is a PCB controller 40. Also as shown in Figure 3, the top housing section 36 is mated onto a casing taper 42 of the housing which surrounds an impeller 44.

The impeller 44 is connected by a drive shaft 46 to a motor 48 having a motor cap 50.

The motor cap 50 and a base plate 52 are mounted in at least one place by a common fixing 54 to a support hub 56 of a base section 58 of the main body 22. The support hub 56 is integrally moulded into an outer duct wall 60 of the base section 58 via a series of downstream guide vanes 62.

The common fixing 54 comprises a screw 54 which is referred to as a common fixing since one screw connects both of the motor cap 50 and motor base plate 52 securely to the support hub 56. In fact, two or more such common fixings 54 are provided. An important feature of the common fixing is the way that the single element is able to connect both of the motor cap 50 and motor base plate 52 to the support hub 56 and, in practice, this has been found to mean that the outer diameter of the support hub 56 and of the motor cap 50 has been able to be made significantly smaller than in conventional prior art fans, thereby augmenting the area of the exhaust duct 24.

Together with the top housing section 36, the generally circular and planar yet slightly outwardly convex fascia cover 32 forms a peripheral air inlet 64 to the fan 16 due to the spacing in the axial direction of the fascia cover 32 from the top housing section 36. On entering the fan 16, the air flow therefore passes through the peripheral air inlet 64. It then passes the webs 34 in a generally radially inward direction before encountering an inlet dome 66 which is generally cylindrical with a domed end 68 facing the fascia cover 32. The inlet dome 66 is also integrally formed with a series of inlet guide vanes 70 which have leading portions 72 and trailing portions 74. The leading portions are planar radially and axially extending sections of the inlet guide vanes 70, whereas the trailing portions 74 are slanted so as to induce swirl into the flow passing downstream.

The inlet dome 66 is integrally formed with a finger guard 76 which is formed with at least two circumferential members 78 which assist in preventing fingers (not shown) from being inserted into the fan 16 and also provide a robust structure for the inlet dome 66 without having to use too much material.

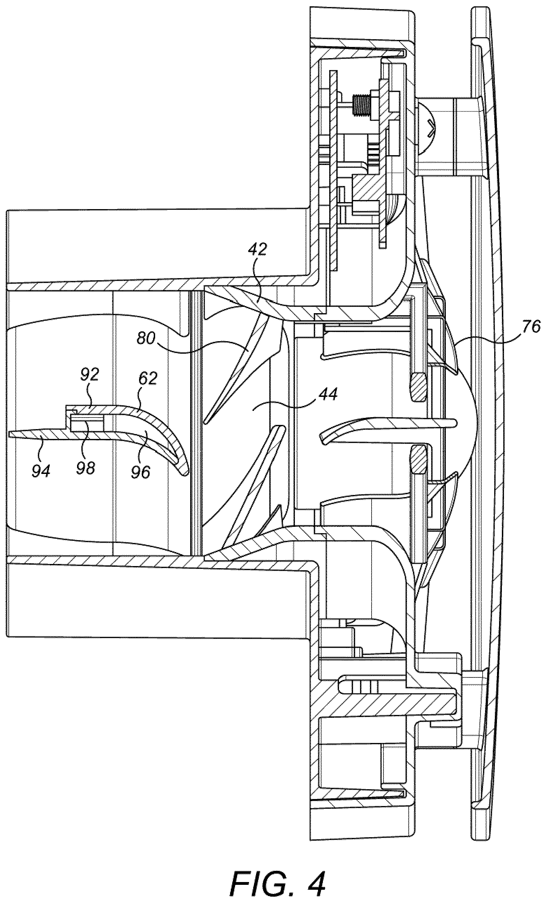

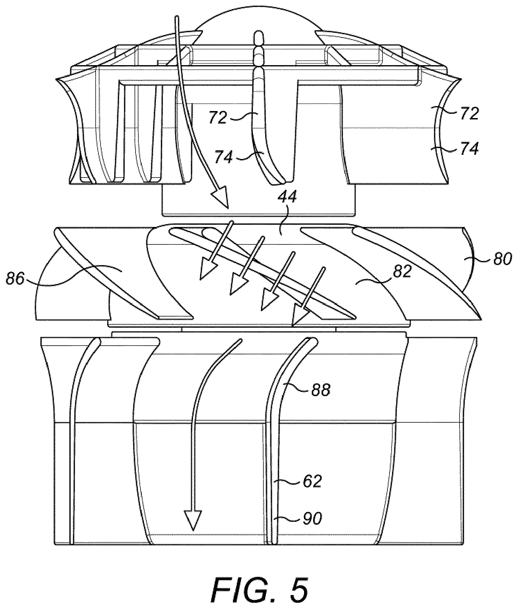

As shown in Figures 4 and 5, the impeller 44 has a series of blades 80, each of which is connected to a conical or slightly convexly domed central hub 82 of the impeller 44. Each blade 80 has a downstream surface 84 thereof adapted to operate at a higher pressure than an upstream surface 86 thereof, the downstream surface being concave and the upstream surface 86 being convex. The impeller 44 is therefore adapted to operate in a forward facing mode. The central impeller hub 82 in this example has a taper angle of 12 degrees to the direction of the axis of the motor 48, although this can be varied in other embodiments. The pitch angle of the blades 80 is in this embodiment set at 38 degrees and this can vary in other embodiments. In this example, the impeller 44 has 7 blades 80 and 4 or 6 inlet guide vanes 70, the unequal numbers of guide vanes 70 and blades 80 preventing drumming. As seen in Figure 4, the impeller 44, including the blades 80 and hub 82, is axially fully contained within the axial length of the casing taper 42.

As shown in Figures 4 and 5, the downstream guide vanes 62, of which in this example there are four or six, are each formed with a leading edge portion 88 which is non-parallel to the axial direction of the impeller 44, i.e. the leading edge portion 88 is bent over (having a circumferential component to its direction as it extends in the axial direction) to meet incoming swirling flow exiting from the impeller 44. Each downstream guide vane 62 also includes a trailing edge portion 70 which is generally planar and extends in a radial and axial direction. The downstream guide vane therefore serves to remove swirl from the flow exiting from the impeller 44, thereby maximising pressure and/or axial velocity, so total energy, in the flow. This assists in enabling the fan 16 to run quietly and provide significant flow rate without being noisy.

As seen in Figure 4, so as to provide power to the motor 48 from the PCB controller 40, one of the downstream guide vanes 62 is formed of one part 92 that is part of the motor cap 50 and one part 94 that is formed integrally with the base section 58, the parts 92, 94 being spaced from one another to present an internal pathway 96 through which a power and communication wiring may pass to the motor 48 from the PCB controller 40.

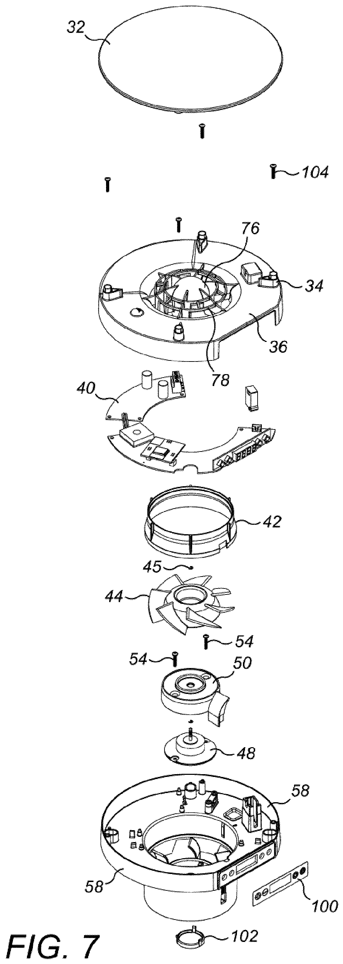

As shown in Figure 7, a controls label 100 is provided on the base section 58, a base cap 102 is provided for the DC motor 48 and four fixings 104 are provided for securing the fascia cover 32 via the webs 34 to the top housing section 36.

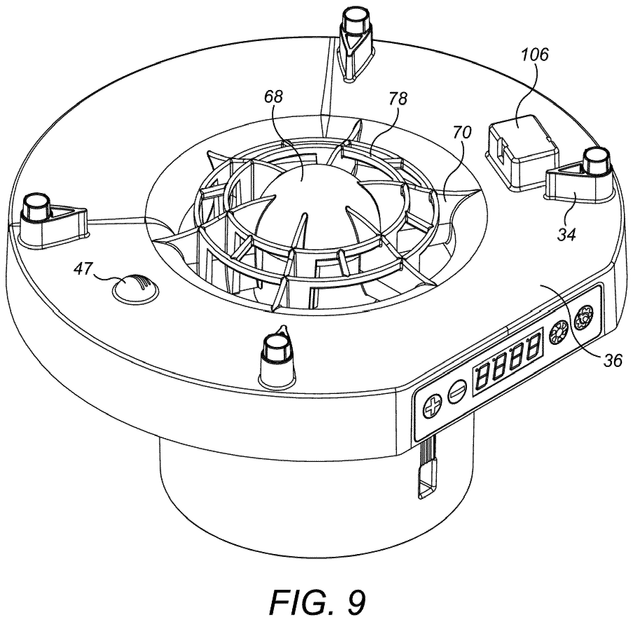

As shown in Figure 9, an optional sensor 106, such as an air flow sensor may be provided in the region of the top housing section 36.

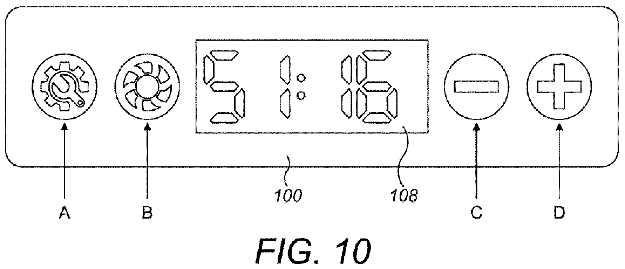

As shown in Figure 10, the controls label may be located in the region of a display screen 108 as well as buttons A, B, C, D for controlling the fan 16.

The improvement in mass flow rate when subject in particular to back pressure while also providing low noise is due to the use of the upstream guide vanes 70, the tapered axial impeller 40 and its casing taper 42, the small hub design of the support hub 56 and/or the downstream guide vanes 62.

The upstream 70 and downstream 62 guide vanes are optimised for the blade pitch angle of the blades 80 of the impeller 44 with a specific number of blades 80, such as 7, chosen to work with a specific number of guide vanes 70, 62 which may vary such as by being 6 or 4 in the case of each of the downstream 62 and inlet guide vanes 70. The efficiency of the fan 62 and pressure development are improved; furthermore, stall is prevented and/or reduced at higher pressures which can generally be an issue with inline/axial fans in conventional arrangements.

A selection of or all of the trailing edge portions of the upstream guidelines 70, the leading portions of the downstream guide vanes 62 and the blades 80 may be provided with twist or wash-out in the radial direction; this may assist in provided optimum angles of attack for the blades 80 and downstream guides vanes 62 due to the higher velocity of the blades 80 near their tips compared to near the blade hub 82 and the associated potential differences in flow speed within the fan 16.

The diameter of the support hub 56 can be made as small as possible for the motor 48 that has been selected so that the net opening between the support hub 56 and the exhaust duct 24 is large which reduces the velocity pressure and therefore decreases the waste of power in this area of the fan 16. This small diameter of the support hub 56 has been accomplished by the fixing arrangement using the common fixing 54 for the motor 48 and motor cap 50. In one example, the support hub 56 diameter is 62 mm whereas an equivalent hub diameter in a conventional prior art arrangement is 69 mm using the same motor dimensions.

The downstream guide vanes 62 have been found to be particularly useful for straightening the air flow coming off the impeller 44 and this improves fan efficiency by generating static pressure, i.e. by removing swirl.

In testing between an impeller with a domed interior hub and a conical hub, it was found that a conical shape or a shape which is slightly domed is preferred as an option as it provided greater pressure differential at a given air flow rate.

Different tapers to the fan hub 82 were also tested and a taper of 12 degrees was found to be surprisingly superior to tapers of zero and 24 degrees, the zero-degree taper causing pressure passing and the higher taper causing a reduction in air flow and increase in speed.

Pitch angles of 28 and 38 degrees were tested for the blades 80 and it was surprisingly found that the pitch angle of 38 degrees produced a higher flow rate at a lower speed with the unit running at full speed.

Different numbers of impeller blades 80 were also tested with either 6 or 7 blades and using 7 blades more flow rate was produced at a lower speed.

The upstream guide vane of the specific embodiment was also tested alongside an arrangement with a larger inlet guide vane where the inlet guide vane started substantially at the outer radius of the fascia cover 32 and extended along inside the roof of the fascia cover. It was felt that this larger guide vane would be substantially superior but in fact, surprisingly, it only gave a very slight increase in air flow with a reduction in speed. It has been found that the impeller 44 of the embodiment described produces a predictable change in impeller speed dependent upon the pressure loading.

The unit is easily able to keep air flow rate within 30% of the set flow rate with a back pressure of 20 Pa applied, especially when pressure increases; the PCB controller 40 measures the speed, i.e. rpm of the motor 48 and the power consumption (or current in milliamps) and from this regulates the motor speed to maintain flow. In some embodiments a flow or pressure sensor (not shown) may be provided for, in at least one mode of the unit, passing information to the controller 40 for controlling fan speed based upon sensed flow speed or pressure. This can assist in maintaining air flow well against increasing back pressures.

The display screen 108 is an LED display and the push buttons A, B, C, D enable straightforward and user-friendly commissioning. The fan 16 has an installer and end user menu system which can include basic settings for relative humidity and for a run-on timer.

The unit may have a WI-FI direct commissioning and internet connection 18 (comprising Wi-Fi direct 224 and Wi-Fi-to-router 208 connections to router 200; plus an internet-to-data-centre connection 217 on to data centre 214), enabling data logging of air quality and humidity. This may also enable customised profiles depending on the environment to achieve accurate demand control ventilation. When linked to the internet, local weather data from the web can be used for this process. Multiple units can be used in a single App so that all decentralized mechanical extra ventilators (DMEVs) within the building 10 or dwelling can operate either independently, or as a wireless linked whole house ventilation system, for example providing high boost air flow rates for the whole dwelling when required.

The fan 16 due to its incorporated features advantageously produces higher air flows/higher pressure at a lower speed than conventional units. With the fan 16 producing required performance at a lower speed, the fan sound levels are reduced significantly and the bearing motor life can also be increased.

In a direct comparison of the fan 16 in the present disclosure and a conventional prior art arrangement using the same motors, the conventional product being the best performing product on the market producing the highest flow rate and pressure prior to the present disclosure, the test results showed a significant increase in the motor speed (and thus associated noise) for the conventional unit compared to the fan 16 of the present disclosure.

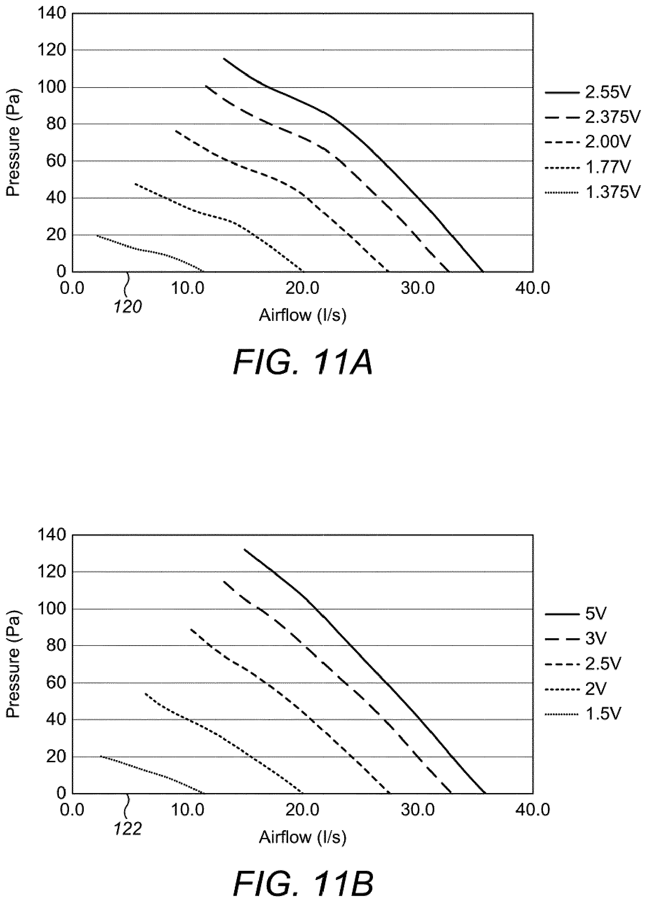

In Figure 11A the graph 120 shows the embodiment of the present disclosure and in Figure 11B graph 122 shows the conventional product tested at the indicated voltages for airflow against pressure difference. The present embodiment compares highly favourably.

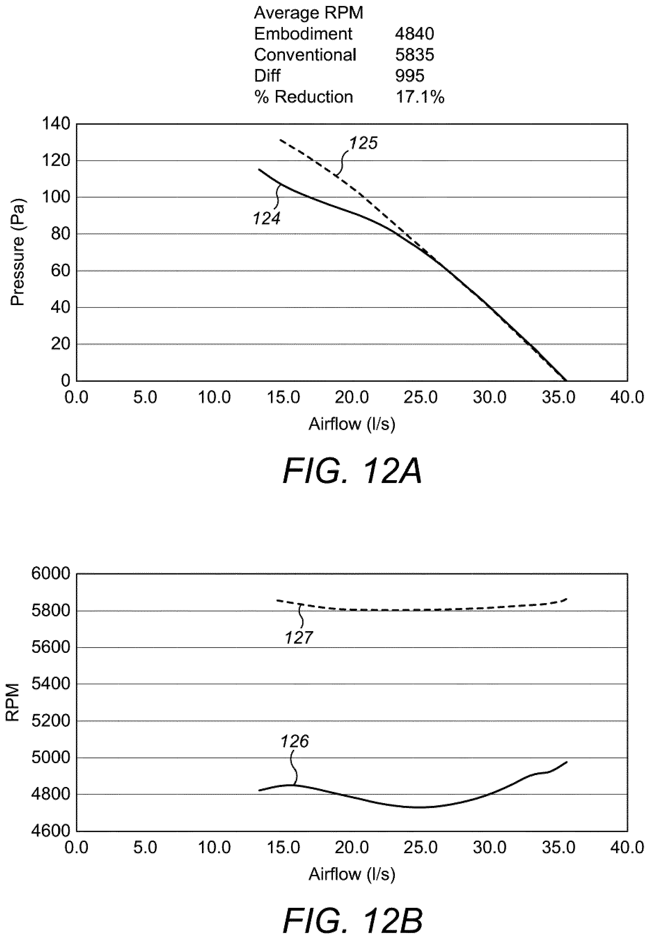

Graphs 124 and 126 for the present embodiment operated at 2.55 Volts in Figs 12A and 12B compare highly favourably with graphs 125 and 127 for the conventional unit operated at 5 Volts with the average RPM in the present embodiment being 17.1% lower, so much quieter and using less power.

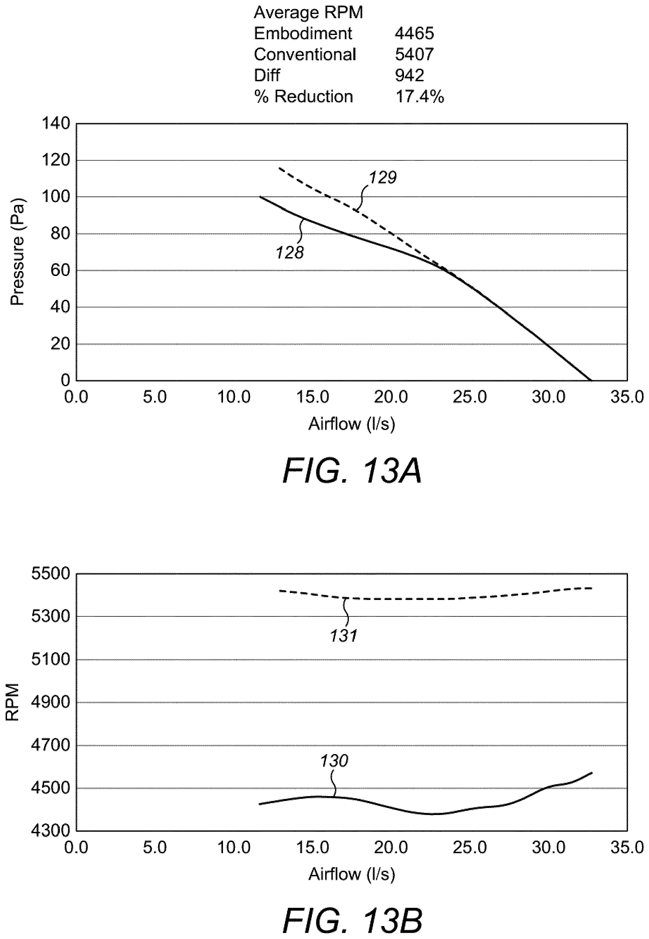

Graphs 128 and 130 for the present embodiment operated at 2.375 Volts in Figs 13A and 13B compare highly favourably with graphs 129 and 131 for the conventional unit operated at 3 Volts with the average RPM in the present embodiment being 17.4% lower, so much quieter and using less power.

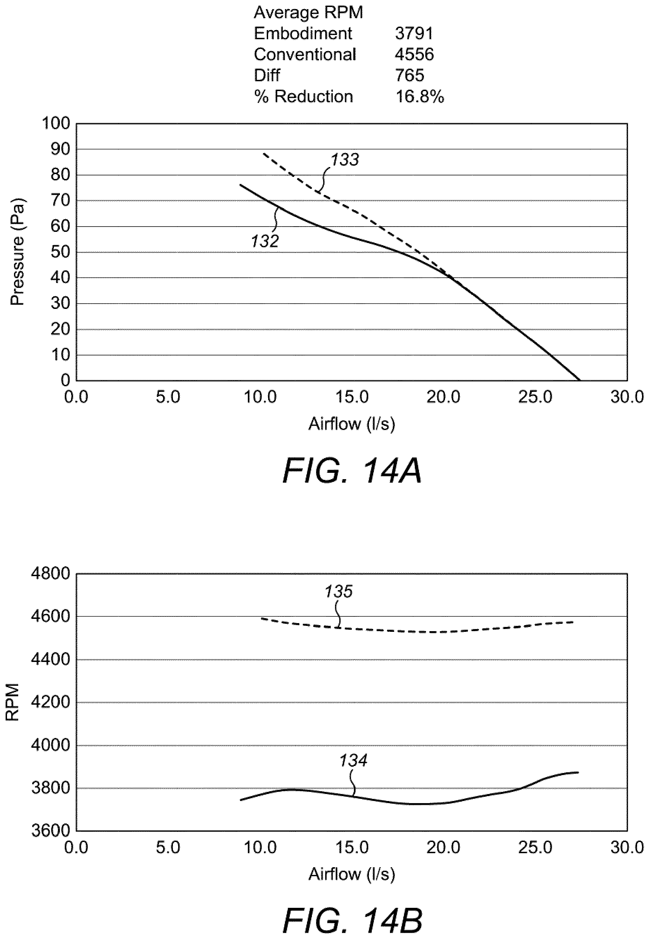

Graphs 132 and 134 for the present embodiment operated at 2.09 Volts in Figs 14A and 14B compare highly favourably with graphs 133 and 135 for the conventional unit operated at 2.5 Volts with the average RPM in the present embodiment being 16.8% lower, so much quieter and using less power.

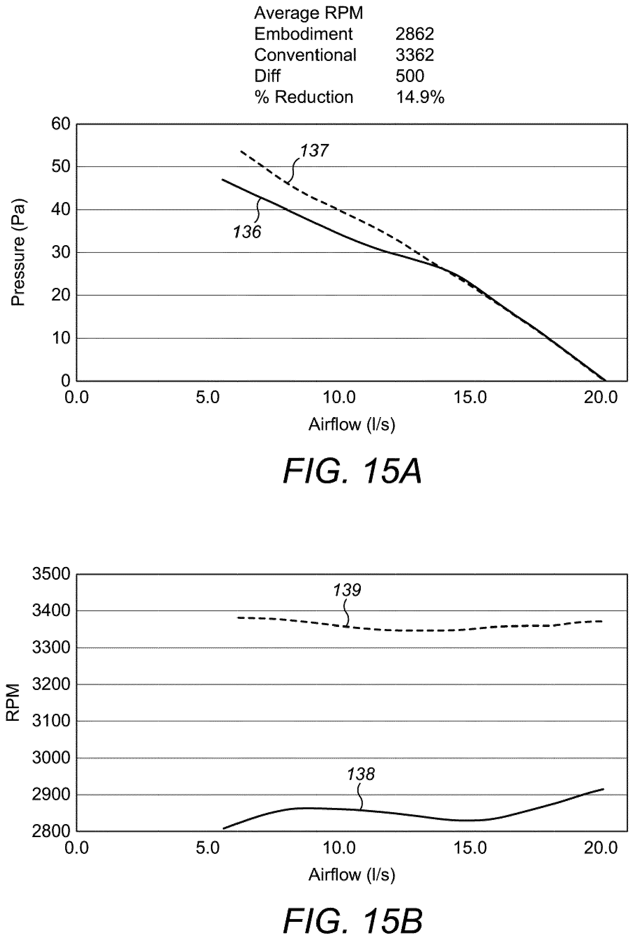

Graphs 136 and 138 for the present embodiment operated at 1.77 Volts in Figs 15A and 15B compare highly favourably with graphs 133 and 135 for the conventional unit operated at 2 Volts with the average RPM in the present embodiment being 14.9% lower, so much quieter and using less power.

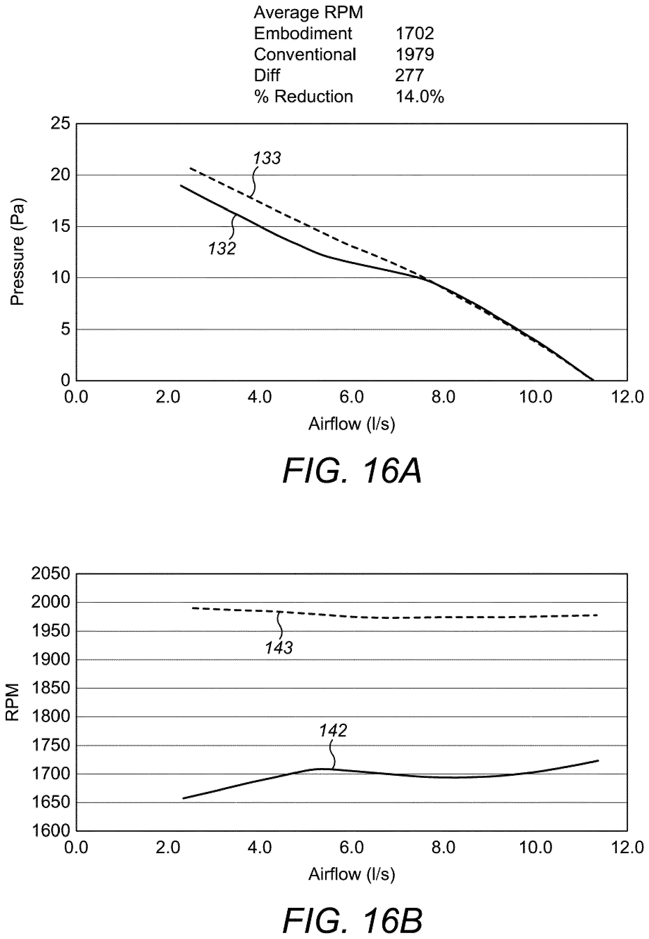

Graphs 140 and 142 for the present embodiment operated at 1.375 Volts in Figs 16A and 16B compare highly favourably with graphs 141 and 143 for the conventional unit operated at 1.5 Volts with the average RPM in the present embodiment being 14.0% lower, so much quieter and using less power.

The fan 16 of the present disclosure can regulate the flow rate without the requirement of additional air flow sensors, which could be costly and problematic with blockage over time in many cases; however, such a flow sensor can optionally be used.

An advantage of the WI-FI direct and internet connection 18 is the ability to control the fan 16 from an App on a smartphone or other remote device with or without interconnection. The unit settings can be downloaded via the internet connection and this information can be used for other/future installations to make easier and faster installs. The commissioning settings can be sent to a central database and used to show compliance with building control. The advantage of the wireless linking together of multiple units in a dwelling is that in normal operation they work efficiently as individual local demand control with each decentralized mechanical extract ventilator fan 16 having onboard air quality sensors. When they are linked together from a central control source they can also operate as a centrally controlled ventilation system. This provides several different whole house ventilation control modes, specifically boost ventilation rates as defined in ADF to be applied as a whole house ventilation rate as if it were a centrally ducted system. This may be desirable to the occupant in certain situations. Additionally, there is the ability to apply a very high or maximum ventilation rate which may assist in providing slightly lower indoor temperature control in periods of very warm weather. With the internet connection and weather data, it is possible to control the ventilation depending not only by the internal humidity measurements but also the external ambient humidity/temperature conditions; for example with high ambient humidity the unit set point for humidity control will automatically increase.

It is possible to provide a link for building management systems to review the operational status of multiple fans 16 on a large development. This may also permit showing the failures of any fans 16 or sensors for quick replacement to maintain required ventilation in the building 10/dwelling.

The motor 48 is preferably a brushless dc motor. The tapered impeller 44 is preferably a plastic moulded article which is moulded onto the shaft 46 of the motor 48 and is secured via a compression fit between the motor shaft 46 and a central impeller shaft. A fixing 45 is also provided for the end of the motor shaft 48 to ensure no separation between the impeller 44 and motor drive shaft 46.

The casing taper 42 may comprise a middle plastic moulded section matching the taper of the central impeller hub 82. The base/main body 22 and middle 42 sections are secured together making a seal to prevent moisture getting into the controls of the PCB controller 40.

The upper plastic moulded section/top housing section 36 together with the fascia cover 32 creates a smoothed inlet to the fan 16 and finishes the look of the product. The upper section, i.e. top housing section 34, has a contact fit into the middle section 42 for securement in place.

The fan 16 in operation may be secured within the cavity wall 20 via four fixing points or a different number in other embodiments and may work with ducting with openings at between 100 and 150 mm. Power is supplied to the fan unit 16 and the operation/setup is via the four-button touch pad and LED display 108. The speed of the fan can be adjusted via the touch pad to achieve the required air flow rate. When in operation, the fan 16 will adjust its speed to maintain flow rate by monitoring the motor speed and current drawn. If there is an increase of pressure of 20 Pa then the fan will adjust its speed to ensure that there is not more than a 30% reduction in air flow.

The drive shaft 46 may be knurled or splined to provide good grip onto the impeller 44. Among the sensors in the unit may be a humidity sensor. This may be provided on the PCB controller 40 under the grille 47 shown in Figure 9.

Other sensors such as a CO₂ sensor and/or flow sensor could also be incorporated.

The construction of the inlet guide vanes 70 may also be very useful in stopping water becoming entrained in the flow into the fan 16. The fan 16 is capable of passing the IPX4 test for sprayed water/splashing, e.g. if used in a shower in a bathroom. It is notable that the construction of the inlet guide vanes 70 enables the flow to come in radially through the inlet, running along the inlet guide vanes 70 radially before turning to axial and running down the guide vanes 70 and becoming swirled by them.

It is a significant advantage that the fan impeller 44 can spin much more slowly than conventional arrangements to provide better performance with much less noise.

For the moulded parts of the arrangement many types of moulded material may be used such as ABS. For example, the fascia cover 32, top housing section 36, casing taper 42, impeller 44, motor cap 50 and base section 58 can all be moulded of such materials.

The circular shape of the fascia cover 32 and the top housing section 36 is particularly advantageous since an installer does not need to install at a particularly accurate angle as an unintended offset to the angle would not be particularly visible. The upstream/ inlet guide vanes 70, impeller features and downstream guide vanes 62 could also be used in for example a 100 mm or 125 mm diameter inline fan or for example in the inlet area for a central mechanical extraction or in a heat recovery heat exchanger unit.

There now is described the optional configuration/commissioning sequence for the fan, with reference to Figure 10.

Button A is used to put the controller into the setup menu and repeated presses cycle through the available options which is shown on the display along with the current value. The options are:
1. **Boost Overrun time** - the length of time the fan continues to run in Boost or High Boost after the switch live signal has been removed.
2. **Humidity threshold** - the Relative Humidity (RH) level where the fan speed begins to increase proportionally based on the measured RH.
3. **Boost delay** - the length of time the switch live signal has to be enabled before the fan increases speed.
4. **Wi-Fi options** - Smart Configuration, Wi-Fi Direct, and Reset to default Passcode (only if Wi-Fi module fitted).

The -/+ buttons, C and D are used to adjust the value for the selected option.
Button B is used to select Through Wall or Duct operation and each of the 3 fan pre-sets in turn, the current value is displayed on the screen. The pre-sets are:
1. **Continuous** - the default running speed.
2. **Boost** - an increased running speed used to reduce humidity in the property.
3. **High Boost** - maximum running speed to significantly increase airflow.

The -/+ buttons C and D are then used to adjust the speed the fan runs at for the selected pre-set.

### Operation

In normal operation the fan will run in Speed 1, Continuous mode. The controller monitors the rotational speed of the fan and the current the fan is drawing. Changes to either of these values are an indication of increased back pressure which could result in reduced airflow. The controller increases the fan speed to restore the correct airflow and continues monitoring the speed and current of the fan to ensure the airflow is maintained with variations in back pressure.
If the fan speed drops very low and the current drawn goes very high this would indicate either a locked rotor or a blockage in the ductwork. As a safety measure the fan is stopped to avoid damaging the motor.

### P1273Demand Control

The Relative Humidity (RH) of the air in the property is monitored via a sensor in the airflow. If the RH exceeds the configured threshold the fan speed proportionally increases from Speed 1 to Speed 2 based on the RH measured.

This demand control could also be based on CO2, VOC or temperature if the appropriate sensor was fitted.

### Switch Input

There is a switch live input which could be wired into the lighting circuit, a signal on this input switches the fan to Speed 2, Boost.

A second OFF/ON cycle of this switch live input within 10 seconds switches the fan to Speed 3, High Boost.

When the switch live input is removed the Boost Overrun functionality keeps the fan running at the selected speed for a user selectable time between 0 and 30 minutes.

If the Boost Delay feature has been configured to a time greater than 0 minutes, the switch live input has to be enabled for the configured time before the fan speed will increase.

### Wi-Fi and Data logging

If the optional Wi-Fi module 18 is fitted the unit can be connected to the property's Wi-Fi router 200 or direct to a mobile phone 202 (or other remote device) using Wi-Fi Direct. The fan unit 16 periodically samples the humidity and temperature and stores average values. If a different type of sensor was fitted, the readings from it would be stored. There is also an accompanying Wi-Fi App 204.

### Wi-Fi App

The Wi-Fi App 204 allows single or multiple fan units 16 to be connected to Wi-Fi 18 and controlled or monitored via a mobile phone 202 (or other remote device). The main features of the App 204 are:
1. **Settings** - allows all of the settings detailed in *Configuration*/*Commission* above to be adjusted.
2. **Manual Boost** - the fan unit 16 can be put into Speed 2, Boost or Speed 3, High Boost via the App 204.
3. **Grouping units** - multiple units 16 within a house can be connected to the App 204. These can be controlled individually but also grouped together. For instance a user may group all of the fan units 16 in the upper floor of their property together then, by pressing one button on the App 204, switch all of them to Speed 2 or Speed 3.
4. **Display stored results** - the average humidity values stored on the controller 40 can be read and displayed on graphs within the App 204. The user can select between hourly, daily, weekly or Monthly graphs. If a different type of sensor was fitted the stored results from this would be displayed on the graph.
5. **Fault indication** - if the controller 40 has detected the fan 16 has stopped rotating a warning is displayed in the App 204.
6. **RSS Humidity Correction** - The App 204 on the phone 202 (or other device, which may include Wi-Fi unit 18 and/or the controller 40 where the App 204 may alternatively reside) periodically connects via a mobile phone network connection 206 (or via Wifi connection 208 to router and via internet connection 210) to (e.g.) RSS weather data centre 212's feed for the current location of the unit 16. From this it extracts the current outdoor RH at this location and sends this value to the controller 40. If the RH value obtained from the RSS feed is the same or higher than the RH measured by the RH sensor on the fan unit 16 the Demand Control function is disabled as increasing airflow will not reduce the RH within the property. The weather data centre 212 may also communicate with the App 204 and/or Wi-Fi module 18/ fan unit 16 via internet or other connection 215 passing through a cloud or remote data centre 214.

The router 200 may be connected to the data centre 214, which may act as a server for storing data including test inspector air flow rate data, which may be entered at a test inspector data device (such as a laptop 216) and sent to the remote data centre 214 via internet (or other connection) 218. A building management user or regulatory inspector may, e.g. using a laptop 220, via a connection 222 such as an internet connection, query the data stored at the remote data centre 214 in order to check that the flow rate performance of the units (16) has met or meets regulations for ventilation.

With the phone 202 out of range or with its relevant communications switched off (or simply as an alternative route of communication), the Wi-Fi module 18 and fan unit 16 may still communicate with the weather centre 212 and/or data centre 214 via Wi-Fi connection 219 and router 200.

The present disclosure provides a system adapted to wirelessly (or with cable) link a plurality of fan units 16 into a single App 204 to enable common boost functions, e.g one App or control unit being able to boost two or more fan units 16 in with common control for the plurality of fan units 16.

The present disclosure provides a system adapted to use weather data stored remotely (such as online) from at least one fan unit 16 to inform and potentially modify operation of the fan(s) based on local weather conditions.

The present disclosure provides a fan unit 16 and a data store / centre 214 (or server which may exists in multiple locations) remote from the fan unit 16 adapted to store and permit controlled access to fan data, e.g. as online published data, such as commissioning data, for example for building control purposes.

Various modifications may be made to the embodiment described without departing from the scope of the invention as set out in the accompanying claims as interpreted under patent law.

## Claims

1. A fan for ventilation, such as building ventilation extract, the fan comprising:
a housing;
an impeller;
a motor arranged to drive the impeller to drive air flow from an inlet to the fan to an outlet thereof, the impeller being located centrally within a flow duct;
and at least one inlet guide vane for guiding flow approaching the impeller.

2. A fan for ventilation as claimed in claim 1 which is relatively small in that:
(a) the flow duct is generally circular and small in diameter whereby said diameter is less than 100 mm, preferably less than 65 mm e.g. 62 mm;
(b) the housing including a port adapted to connected to a generally circular ventilation duct having a diameter of less than 250 mm, preferably 150 mm or less, such as 125 mm or less, e.g. 100 mm and/or
(c) the motor is rated for, or arranged to draw, maximum power consumption at less than 50 W, preferably less than 25 W, more preferably than 15W, 12W being one example.

3. A fan as claimed in claim 1 in which a controller is provided which is arranged for controlling speed of the motor; and in which (a) the controller is arranged to measure the motor speed, i.e. rpm, of the motor and/or the power consumption (or current) thereof and therefrom to regulate the motor speed to maintain flow or (b) in which a flow or pressure sensor (not shown) is provided for, in at least one mode of the unit, passing information to the controller for controlling fan speed based upon sensed flow speed or pressure.

4. A fan as claimed in any preceding claims in which:
(a) each guide vane has an inlet surface portion near the inlet which extends substantially radially and axially, preferably in a plane which contains a rotation axis of the impeller;
(b) each guide vane has a trailing portion thereof which is angled so as to introduce swirl;
(c) in which the fan comprising a series of, e.g. five, said guide vanes being mutually (and preferably equally) angularly spaced apart in a series around an axis of rotation of the impeller;
(d) each guide vane is adapted to support a finger protection guard; and preferably in which the finger protection guard includes at least one circumferential ring member which is attached to each guide vane;
(e) in which the impeller is located axially wholly within a tapered duct portion of the flow duct for promoting axial flow; the tapered duct portion preferably tapering outwards in the downstream direction; and preferably in which the impeller has a tapered hub whose taper approximates to or substantially matches the taper of the tapered duct portion; preferably wherein the tapered hub is outwardly convex in a plane containing an axis of rotation of the impeller;
(f) in which the impeller has a series of impeller blades; each fan blade preferably having curvature; each fan blade more preferably having a convex side facing the inlet and a concave side thereof facing the outlet; the motor typically being adapted to spin the impeller in a forward facing direction with the concave side next to air flow at higher pressure than air flow next to the convex side; and/or
(g) which includes at least one downstream guide vane, preferably in which each downstream guide vane has a leading edge portion which is curved away from being parallel to an axis of rotation of the impeller to meet swirling flow, as well as a trailing edge portion which extends substantially radially and longitudinally so as to reduce swirl.

5. A fan for ventilation, such as building ventilation extract, the fan comprising:
a housing;
an impeller;
a motor arranged to drive the impeller to drive air flow from an inlet to the fan to an outlet thereof;
the impeller being located axially wholly within a tapered duct portion of the duct.

6. A fan as claimed in Claim 5 in which the tapered duct portion tapers outwards in a downstream direction; preferably in which the impeller has a tapered hub whose taper approximates to or substantially matches the taper of the tapered duct portion; the taper of the hub optionally being more than 0 degrees and less than 24 degrees, preferably more than 5 and less than 20 degrees or more than 8 and less than 15 degrees, 10 to 14 degrees being typical and one example being 12 degrees; more preferably in which the tapered hub is conical or outwardly convex in a plane containing an axis of rotation of the impeller; preferably in which, in an axial direction, the hub extends substantially the same (or the same) distance as each blade of the impeller.

7. A fan as claimed in Claim 5 or Claim 6 in which:
(a) the impeller has a series of blades, each fan blade being curved and having a convex side thereof facing the inlet and a concave side thereof facing the outlet;
(b) the fan has at least one inlet guide vane, the inlet guide vane being adapted to promote swirl;
(c) the fan has at least one downstream guide vane, the downstream guide vane being adapted to reduce swirl;
(d) the impeller has at least five blades, for example five blades; or six or seven blades; and/or
(e) a series of fan blades are provided on the impeller, each blade being at a pitch of between 30 and 50 degrees, e.g. from 35 to 45 degrees, e.g. 37 to 40 degrees, such as 38 degrees.

8. A fan for ventilation, such as building ventilation extract, the fan comprising:
a housing;
an impeller;
a motor arranged to drive the impeller and drive air flow from an inlet to the fan to an outlet thereof;
and at least one downstream guide vane which is at least partly curved and arranged to reduce swirl in flow downstream of the impeller;
and preferably in which the downstream guide vane has a leading edge portion which is curved away from an axis of the impeller to meet swirling flow.

9. A fan for ventilation, such as building ventilation comprising:
a housing;
an impeller;
a motor arranged to drive the impeller to drive air flow from an inlet to an outlet thereof;
the motor being located in a duct and having a motor cover, the motor and motor cover being secured to a support by a common fixing.

10. A fan as claimed in Claim 9:
(a) in which the common fixing is a screw, bolt, rivet, weld or heat stake;
(b) in which the cover and/or support comprises a support hub coaxial with the motor; preferably in which the support and/or motor cover is connected to the duct via a guide vane;
(c) in which the impeller is upstream of the support hub, the impeller having a central hub and outer surface of which has a downstream trailing peripheral edge which has substantially a same diameter as an adjacent outer diameter of the support hub; preferably in which the support hub has a leading portion which is substantially cylindrical; preferably in which the support hub has a trailing portion which is tapered, decreasing in diameter towards downstream; preferably in which the support hub is connected to the duct by a series of guide vanes; and preferably in which the duct is cylindrical in the region of the motor cover and/or the support.

11. A fan as claimed in any preceding claim having a substantially circular cover plate and an air inlet thereto.

12. A ventilation system including at least one fan as claimed in any preceding claim and an exhaust duct attached to an outlet of the fan and installed within a building, the fan being adapted to push air out of the building through the exhaust duct.

13. A data communication system for fan unit control, the system having a wireless (or with cable) link from plurality of fan units into a single app or control unit to enable common fan speed boost functionality; and preferably comprising one app or control unit which is adapted to boost or un-boost speed of two or more fan units with common control for the plurality of fan units.

14. A data communication system for fan unit control, the system having at least one fan unit adapted to use weather data collected or stored remotely (such as online) from the at least one fan unit to inform and potentially modify operation of the fan(s) based on local weather conditions predicted or current at the at least one fan unit.)

15. A data communication system for fan unit control, the system having a fan unit and a data store / centre (or server which may exists in multiple locations) remote from the fan unit and adapted to store and/or permit controlled access to fan data; and preferably in which the fan data is online published data and/or commissioning data, for example for building control purposes.
